# FASCICULE DE BREVET EUROPEEN

(11) **EP 3 820 958 B1**
(45) Date de publication et mention de la délivrance du brevet: **22.01.2025**
(21) Numéro de dépôt: 19737541.3
(22) Date de dépôt: 10.07.2019
(51) Int. Cl.: C09K 5/10, C09K 21/08, H01M 10/613, H01M 10/625, H01M 10/6567

(54) **COMPOSITION REFROIDISSANTE ET IGNIFUGEANTE POUR SYSTEME DE PROPULSION D'UN VEHICULE ELECTRIQUE OU HYBRIDE**
KÜHL- UND FLAMMSCHUTZZUSAMMENSETZUNG FÜR EIN ANTRIEBSSYSTEM EINES ELEKTRISCHEN ODER HYBRIDFAHRZEUGS
COOLING AND FLAME-RETARDANT COMPOSITION FOR A PROPULSION SYSTEM OF AN ELECTRIC OR HYBRID VEHICLE

(30) Priorité: 13.07.2018 FR 1856476
(43) Date de publication de la demande: 19.05.2021
(73) Titulaire: TotalEnergies OneTech, 92400 Courbevoie (FR)
(72) Inventeur: LACROIX, Eric, 69480 AMBERIEUX D'AZERGUES (FR); CHINA, Philippe, 38200 SEYSSUEL (FR); RONDELEZ, Francis, 92260 FONTENAY-AUX-ROSES (FR)
(74) Mandataire: Cabinet Nony
(86) Numéro de dépôt international: PCT/EP2019/068614
(87) Numéro de publication internationale: WO 2020/011886

(56) Documents cités:
- WO-A1-02/08378
- WO-A1-2008/149325
- WO-A1-2011/113851
- WO-A1-2018/078024
- WO-A1-97/21425
- WO-A1-97/47704
- US-A1- 2012 157 362
- AMONYMOUS: "Isopar(TM) fluids for personal care products", 31 January 2018 (2018-01-31), pages 1 - 2, XP055560761, Retrieved from the Internet <URL:https://www.exxonmobilchemical.com/~/media/chemicals/kl-media-assets/2018/02/09/00/01/isopar_fluids_factsheets_enpdf.pdf> [retrieved on 20190222]

## Description

La présente invention concerne le domaine des compositions refroidissantes pour un système de propulsion d'un véhicule électrique ou hybride, et plus particulièrement des batteries et de l'électronique de puissance. La composition selon l'invention présente en outre des propriétés de résistance à l'inflammation. Autrement dit, la présente invention vise à proposer un moyen de refroidir les batteries de véhicules électriques ou hybrides *via* un fluide pouvant refroidir mais aussi retarder et/ou éviter la propagation du feu.

L'évolution des normes internationales pour la réduction des émissions de CO₂, mais également pour la diminution de la consommation d'énergie, pousse les constructeurs automobiles à proposer des solutions alternatives aux moteurs à combustion.

L'une des solutions identifiées par les constructeurs automobiles consiste à remplacer les moteurs à combustion par des moteurs électriques. Les recherches pour la réduction des émissions de CO₂ ont donc mené au développement des véhicules électriques par un certain nombre de compagnies automobiles.

Par « véhicule électrique » au sens de la présente invention, on entend un véhicule comprenant un moteur électrique comme unique moyen de propulsion à l'inverse d'un véhicule hybride qui comprend un moteur à combustion et un moteur électrique comme moyens de propulsion combinés.

Par « système de propulsion » au sens de la présente invention, on entend un système comprenant les pièces mécaniques nécessaires à la propulsion d'un véhicule électrique. Le système de propulsion englobe ainsi plus particulièrement un moteur électrique, ou l'ensemble rotor-stator, de l'électronique de puissance (dédié à la régulation de la vitesse), une transmission et une batterie.

La composition refroidissante selon l'invention, tout en assurant le refroidissement de la batterie, garantit la sécurité des batteries.

La composition selon l'invention joue ainsi le double rôle de refroidissement et de résistance à l'inflammation.

Les systèmes de propulsion électriques génèrent de la chaleur pendant leur fonctionnement *via* le moteur électrique, l'électronique de puissance et les batteries. La quantité de chaleur générée étant supérieure à la quantité de chaleur normalement dissipée à l'environnement, il est nécessaire d'assurer un refroidissement du moteur, de l'électronique de puissance et des batteries. De manière générale, le refroidissement s'effectue sur plusieurs parties du système de propulsion générant de la chaleur et/ou les parties dudit système sensibles à la chaleur, afin d'éviter d'atteindre des températures dangereuses, et notamment l'électronique de puissance et les batteries.

Traditionnellement, il est connu de refroidir les moteurs électriques par l'air ou par l'eau, éventuellement associée à du glycol. Ces refroidissements ne sont pas optimum, voire insuffisants avec les nouvelles évolutions du système de propulsion des véhicules électriques et hybrides.

En outre, un tel refroidissement du moteur n'exonère pas de prévoir un refroidissement à part entière au niveau des batteries et de l'électronique de puissance, qui peuvent générer de la chaleur, que l'on souhaite pouvoir contrôler, comme détaillé ci-après.

On connaît par ailleurs des retardateurs de flammes pouvant être mis oeuvre dans des fluides, y compris huileux, notamment pour des applications industrielles.

Toutefois, certaines huiles quasiment ininflammables sont généralement composées d'halogénés lourds tels que des polychlorotrifluoroéthylènes (PCTFE). Par ailleurs, certains fluides organiques perfluorés de type éther ou cétone sont également connus comme fluide de refroidissement pour le système de propulsion des véhicules électriques.

Ces composés halogénés sont très chers et leur utilisation n'est pas privilégiée pour des raisons règlementaires et d'environnement. De plus, ces composés halogénés ont une densité élevée qui s'ajoutent à la masse de la batterie et qui aurait pour conséquence finale de réduire l'autonomie du véhicule.

Malgré les systèmes de refroidissement connus dans le domaine de la lubrification des systèmes de propulsion des véhicules électriques ou hybrides, le risque ne peut être complètement écarté de voir la batterie surchauffer au niveau d'une cellule, ce qui peut conduire à une explosion et à un embrasement global de la batterie, appelé « effet emballement ». C'est en particulier ce qui peut être à craindre dans le fonctionnement d'une batterie Li-ion ou Ni-Cd, en particulier visées dans le cadre de la présente invention.

La présente invention vise précisément à proposer une nouvelle composition permettant de satisfaire simultanément le refroidissement des batteries et de l'électronique de puissance du système de propulsion susmentionnés d'une part, ainsi que d'autre part d'assurer la sécurité des batteries, en particulier les batteries Lithium-ion (Li-ion) ou Nickel-Cadmium (Ni-Cd), en conférant une propriété de résistance à l'inflammation.

Plus précisément, les inventeurs ont découvert qu'il est possible d'assurer la double fonction de refroidissement et de résistance à l'inflammation pour les batteries et électronique de puissance de systèmes de propulsion de véhicules électriques ou hybrides, en mettant en oeuvre au moins un retardateur de flammes, et plus particulièrement un retardateur de flammes fluoré de formule (I) telle que définie ci-après, dans un fluide hydrocarboné ayant un point d'ébullition supérieur ou égal à 50°C.

La composition ainsi formée peut être directement mise en contact avec la batterie et l'électronique de puissance et les refroidir, tout en assurant une sécurité accrue en cas d'emballement de ladite batterie.

Ainsi, la présente invention concerne, selon un premier de ses aspects, une composition de refroidissement d'un système de propulsion d'un véhicule électrique ou hybride, et plus particulièrement de son électronique de puissance et de ses batteries, comprenant :
(i) au moins un fluide hydrocarboné ayant un point d'ébullition supérieur ou égal à 50°C ; et
(ii) au moins un retardateur de flammes répondant à la formule (I)

   R_{F}-L-R_{H} (I)
dans laquelle
R_{F} est un groupe perfluoré ou partiellement fluoré, en particulier comportant de 1 à 22, de préférence de 1 à 20, encore plus préférentiellement de 1 à 16 atomes de carbone,
R_{H} est un groupe hydrocarboné comportant entre 3 et 22 atomes de carbone, plus préférentiellement entre 3 et 18, par exemple entre 5 et 15, voire entre 10 et 15 atomes de carbone,
L est un linker,
le fluide hydrocarboné ayant un point d'ébullition supérieur ou égal à 50°C étant présent dans la composition en une teneur supérieure ou égale à 80 % en poids, de préférence allant de 80 % à 99,5 % en poids, par rapport au poids total de la composition ;
ledit retardateur de flammes de formule (I) étant présent dans une teneur supérieure ou égale à 0,5 % en poids, par rapport au poids total de la composition ;
ladite composition étant exempte d'eau

La présente invention concerne également l'utilisation d'au moins un retardateur de flammes répondant à la formule (I) :

R_{F}-L-R_{H} (I)

dans laquelle
R_{F} est un groupe perfluoré ou partiellement fluoré, en particulier comportant de 1 à 22, de préférence de 1 à 20, encore plus préférentiellement de 1 à 16 atomes de carbone,
R_{H} est un groupe hydrocarboné comportant entre 3 et 22 atomes de carbone, plus préférentiellement entre 3 et 18, par exemple entre 5 et 15, voire entre 10 et 15 atomes de carbone,

et L est un linker,
dans une composition de refroidissement d'un système de propulsion d'un véhicule électrique ou hybride, et plus particulièrement de son électronique de puissance et de ses batteries, pour lui conférer des propriétés de résistance à l'inflammation, ladite composition de refroidissement comprenant au moins un fluide hydrocarboné ayant un point d'ébullition supérieur ou égal à 50 °C, le fluide hydrocarboné ayant un point d'ébullition supérieur ou égal à 50°C étant présent dans la composition en une teneur supérieure ou égale à 80 % en poids, de préférence allant de 80 % à 99,5 % en poids, par rapport au poids total de la composition.

Plus particulièrement, la composition refroidissante, ainsi additivée, est destinée à être mise en contact direct avec les batteries des véhicules électriques, notamment les batteries Li-ion ou batterie Ni-Cd, qui sont notamment en immersion ou semi-immersion, statique ou en circulation, dans ladite composition refroidissante additivée, ou composition selon l'invention, ou encore directement pulvérisée sous forme de spray, jet ou brouillard d'huile.

Des composés fluorés, et notamment sous forme de composés fluorés diblocs sont décrits dans le document WO97/21425. Toutefois, ces composés fluorés sont décrits comme agents dispersants permettant de contrôler la biodisponibilité et l'efficacité de composés lipophiles, dans des émulsions. Aucune application conforme à la présente invention n'y est décrite ni suggérée. Par ailleurs, les documents WO02/08378, WO97/47704, WO2008/149325 et US2012/157362 divulguent de différentes compositions comportant au moins un fluide hydrocarboné en combinaison avec au moins un composé partiellement fluoré.

Une composition selon l'invention, qui se présente avantageusement sous forme d'une solution micellaire, permet de refroidir efficacement la batterie et l'électronique de puissance présentes dans un véhicule électrique ou hybride.

Également, une composition selon l'invention permet de retarder ou d'éviter l'emballement thermique, voire la propagation du feu en cas d'inflammation d'une des cellules de la batterie d'un tel véhicule électrique ou hybride.

Ainsi, cette composition unique selon l'invention permet d'assurer à la fois le refroidissement de l'électronique de puissance et de la batterie et sa sécurisation au feu, en retardant et/ou en évitant la propagation du feu, en particulier en cas d'explosion et/ou d'embrasement de la batterie, notamment une batterie Li-ion ou Ni-Cd, dans un véhicule électrique ou hybride.

L'invention concerne encore un procédé de refroidissement et d'ignifugation d'au moins une batterie d'un système de propulsion d'un véhicule électrique ou hybride, comprenant au moins une étape de mise en contact d'au moins une batterie, en particulier une batterie Lithium-ion ou Nickel-Cadmium, avec une composition selon l'invention.

D'autres caractéristiques, variantes et avantages de la mise en oeuvre d'une composition selon l'invention ressortiront mieux à la lecture de la description, et des figures qui suivent, donnés à titre illustratif et non limitatif de l'invention.

Dans le cadre de la présente invention, il pourra être utilisé indifféremment les termes « ignifugeant », apte à la « sécurisation au feu », « retardateur de flammes », « retardant et/ou évitant la propagation du feu » ou « résistant à l'inflammation ». Tous ces termes qualifient les composés présentant la capacité à sécuriser un objet face à la survenue d'une explosion ou d'un embrasement, en particulier suite à une surchauffe.

Dans la suite du texte, les expressions « compris entre ... et ... », « allant de ... à ... » et « variant de ... à ... » sont équivalentes et entendent signifier que les bornes sont incluses, sauf mention contraire.

L'expression « comportant un » doit être comprise comme étant synonyme de « comportant au moins un », sauf si le contraire est spécifié.

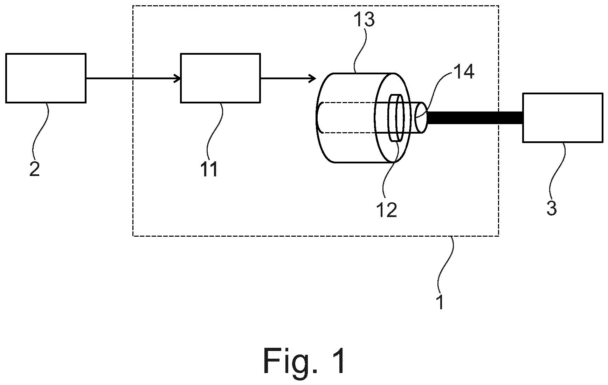

La figure 1 est une représentation schématique d'un système de propulsion électrique ou hybride.

### COMPOSITION

### Fluide hydrocarboné

Comme indiqué précédemment, une composition de refroidissement pour système de propulsion d'un véhicule électrique ou hybride selon la présente invention comprend au moins un fluide hydrocarboné ayant un point d'ébullition supérieur à 50°C.

Selon un mode de réalisation particulier de l'invention, le fluide hydrocarboné a un point d'ébullition compris entre 50 °C et 350 °C, en particulier entre 60 °C et 250 °C, et encore plus particulièrement entre 80 °C et 200 °C.

De préférence, le fluide hydrocarboné conforme à l'invention présente une teneur en carbone d'origine biologique supérieure ou égale à 90 % en poids, par rapport au poids total du fluide hydrocarboné.

Au sens de la présente invention, on entend par « fluide hydrocarboné », tout fluide comprenant des molécules d'hydrocarbures linéaires, saturés ou insaturés, pouvant également comprendre des groupes aromatiques ou cycliques, ou encore des hétéroatomes.

Avantageusement, le fluide hydrocarboné conforme à l'invention est un hydrocarbure comprenant au moins 8 atomes de carbone, par exemple entre 8 et 22 atomes de carbone, de préférence entre 15 et 22 atomes de carbone. Par exemple, il peut s'agir d'un alcane en C₈-C₂₂, de préférence en C₁₅-C₂₂.

Avantageusement, le fluide hydrocarboné conforme à l'invention est totalement saturé. De préférence, les composants du fluide hydrocarboné sont choisis parmi les isoparaffines comprenant de 12 à 30 atomes de carbone, préférentiellement de 13 à 19 atomes de carbone, et plus préférentiellement de 14 à 18 atomes de carbone.

Une composition refroidissante selon l'invention comprend avantageusement une teneur en poids en isohexadécane inférieure ou égale à 50%.

Selon un mode de réalisation particulier de l'invention, le fluide hydrocarboné comprend des alcanes, ou molécules linéaires d'hydrocarbures saturés à chaîne non cyclique, en particulier comprenant entre 12 et 30 atomes de carbone, dans une teneur comprise entre 80 et 100% en poids, par rapport au poids total du fluide hydrocarboné, voire entre 90 et 100% en poids, et par exemple entre 95 et 100% en poids.

Dans le cadre de la présente invention, les « paraffines » désignent les hydrocarbures à chaînes droites (encore appelées « paraffines normales ») ou et à chaînes ramifiées (encore appelées « isoparaffines »).

A titre d'hétéroatomes, dans le cadre de la présente invention, on peut notamment citer l'azote et l'oxygène.

Selon un mode de réalisation particulier de l'invention, le fluide hydrocarboné comprend de 90 à 100% en poids d'isoparaffines, une teneur de paraffines normales allant de 0 à 10% en poids et une teneur en carbones d'origine biologique supérieure ou égale à 90% en poids par rapport au poids total du fluide hydrocarboné.

Le fluide hydrocarboné comprend avantageusement une teneur supérieure ou égale à 90 % en poids, en particulier supérieure ou égale à 95 % en poids, et encore plus avantageusement supérieure ou égale à 98 % en poids d'isoparaffines, par rapport au poids total en fluide hydrocarboné.

Selon un mode réalisation de l'invention, les isoparaffines présentes dans le fluide hydrocarboné comportent de 12 à 30 atomes de carbone, de préférence de 13 à 19 atomes de carbone et de façon encore plus préférée de 14 à 18 atomes de carbone.

Le fluide hydrocarboné comprend avantageusement une teneur en paraffines normales inférieure ou égale à 10% en poids, préférentiellement inférieure ou égale à 5% et encore plus préférentiellement inférieure ou égale à 2% en poids, par rapport au poids total du fluide hydrocarboné.

Les isoparaffines sont avantageusement des isoparaffines non cycliques. De préférence, le fluide hydrocarboné présente un ratio massique isoparaffines sur paraffines normales d'au moins 12 :1, préférentiellement d'au moins 15 :1 et plus préférentiellement d'au moins 20 :1. Selon un mode de réalisation encore plus particulier, le fluide hydrocarboné ne comprend pas de paraffines normales.

Selon un mode de réalisation, le fluide hydrocarboné comprend de préférence une teneur en poids d'isoparaffines allant de 90 à 100% et une teneur en paraffines normales allant de 0 à 10%, préférentiellement de 95 à 100% d'isoparaffines choisies parmi les alcanes comportant de 12 à 30 atomes de carbone, de préférence de 12 à 24 atomes de carbone, de préférence encore de 12 à 22 atomes de carbone.

Selon un mode de réalisation particulier, le fluide hydrocarboné conforme à l'invention comprend une majorité, c'est-à-dire plus de 90% en poids, de molécules ayant de 14 à 18 atomes de carbone, telles que des isoparaffines.

Selon un autre mode de réalisation, le fluide hydrocarboné conforme à l'invention comprend de 60 à 95% en poids, de préférence de 80 à 98% en poids, d'isoparaffines choisies dans le groupe consistant en des isoparaffines en C15, des isoparaffines en C16, des isoparaffines en C17, des isoparaffines en C18 et leurs mélanges de deux ou de plusieurs d'entre eux.

Selon un mode de réalisation, le fluide hydrocarboné comprend :
- des isoparaffines ayant 15 atomes de carbone et des isoparaffines ayant 16 atomes de carbone en une quantité totale allant de 80 à 98% en poids, par rapport au poids total du fluide hydrocarboné, ou
- des isoparaffines ayant 16 atomes de carbone, des isoparaffines ayant 17 atomes de carbone et des isoparaffines ayant 18 atomes de carbone en une quantité totale allant de 80 à 98% en poids, par rapport au poids total du fluide hydrocarboné, ou
- des isoparaffines ayant 17 atomes de carbone et des isoparaffines ayant 18 atomes de carbone en une quantité totale allant de 80 à 98% en poids, par rapport au poids total du fluide hydrocarboné.

Selon un mode de réalisation préféré de l'invention, le fluide hydrocarboné comprend des isoparaffines ayant 17 atomes de carbone et des isoparaffines ayant 18 atomes de carbone en une quantité totale allant de 80 à 98% en poids, par rapport au poids total du fluide hydrocarboné.

Des exemples de fluides hydrocarbonés préférés selon l'invention sont celles comprenant :
- de 30 à 70% en poids d'isoparaffines en C15 et de 30 à 70% en poids d'isoparaffines en C16, de préférence de 40 à 60% en poids d'isoparaffines en C15 et de 35 à 55% en poids d'isoparaffines en C16, par rapport au poids total du fluide hydrocarboné,
- de 5 à 25% d'isoparaffines en C15, de 30 à 70% d'isoparaffines en C16 et de 10 à 40% d'isoparaffines en C17, de préférence de 8 à 15% d'isoparaffines en C15, de 40 à 60% d'isoparaffines en C16 et de 15 à 25% d'isoparaffines en C17, par rapport au poids total du fluide hydrocarboné,
- de 5 à 30% d'isoparaffines en C17 et de 70 à 95% d'isoparaffines en C18, de préférence de 10 à 25% d'isoparaffines en C17 et de 70 à 90% d'isoparaffines en C18, par rapport au poids total du fluide hydrocarboné.

Le fluide hydrocarboné comprend de préférence une teneur en poids de composés naphténiques inférieure ou égale à 3%, préférentiellement inférieure ou égale à 1%, plus préférentiellement inférieure ou égale à 0,5% et encore plus préférentiellement inférieure ou égale à 500 ppm, voire à 100 ppm ou 50 ppm.

Selon un autre mode de réalisation préféré, le fluide hydrocarboné comprend une teneur en poids d'isoparaffines allant de 90 à 100%, une teneur en poids de paraffines normales allant de 0 à 10% et une teneur en poids de composés naphténiques inférieure ou égale à 1%. Préférentiellement le fluide hydrocarboné comprend une teneur en poids allant de 95 à 100% d'isoparaffines, de 0 à 5% de paraffines normales et une teneur en poids de composés naphténiques inférieure ou égale à 0,5%. Plus préférentiellement elle comprend une teneur en poids allant de 98% à 100% d'isoparaffines, de 0 à 2 % de paraffines normales et une teneur en poids de composé naphténiques inférieure ou égale à 100 ppm.

Le fluide hydrocarboné est avantageusement exempt de composés aromatiques. Par exemple, on entend une teneur en poids de composés aromatiques inférieure ou égale à 500 ppm, de préférence inférieure ou égale à 300 ppm, préférentiellement inférieure ou égale à 100 ppm, plus préférentiellement inférieure ou égale à 50 ppm et avantageusement inférieure ou égale à 20 ppm mesurée par exemple par spectrométrie UV.

La teneur en poids en isoparaffines, en paraffines normales, en composés naphténiques et/ou en aromatiques du fluide hydrocarboné peut être déterminée selon des méthodes bien connues de l'homme du métier. On peut citer à titre d'exemple non limitatif, une méthode par chromatographie en phase gazeuse.

Selon un autre mode de réalisation préféré, le fluide hydrocarboné comprend une teneur en poids d'isoparaffines allant de 90 à 100%, une teneur en poids de paraffines normales allant de 0 à 10%, une teneur en poids de composés naphténiques inférieure ou égale à 1% et une teneur en poids de composés aromatiques inférieure ou égale à 500 ppm. Préférentiellement le fluide hydrocarboné comprend une teneur en poids allant de 95 à 100% d'isoparaffines, de 0 à 5% de paraffines normales, une teneur en poids de composés naphténiques inférieure ou égale à 0,5% et une teneur en poids de composés aromatiques inférieure ou égale à 300 ppm, de préférence inférieure à 100 ppm, préférentiellement inférieure à 50 ppm et avantageusement inférieure à 20 ppm. Préférentiellement aussi le fluide hydrocarboné comprend une teneur en poids allant de 95 à 100% d'isoparaffines, de 0 à 5% de paraffines normales et une teneur en poids de composés aromatiques inférieure ou égale à 100 ppm. Plus préférentiellement elle comprend une teneur en poids allant de 98% à 100% d'isoparaffines, de 0 à 2 % de paraffines normales, une teneur en poids de composés naphténiques inférieure ou égale à 100 ppm et une teneur en poids de composés aromatiques inférieure ou égale à 100 ppm.

Le fluide hydrocarboné a également de préférence une teneur en poids de composés soufrés extrêmement basse, typiquement inférieure ou égale à 5 ppm, préférentiellement inférieure ou égale à 3 ppm et plus préférentiellement inférieure ou égale à 0,5 ppm à un niveau trop bas pour être détectée grâce à des analyseurs de basse-teneur en soufre conventionnels.

Le fluide hydrocarboné a également de préférence un point éclair supérieur ou égal à 110°C, préférentiellement supérieur ou égal à 120°C et plus préférentiellement supérieur ou égal à 140°C selon la norme EN ISO 2719. Un point éclair élevé, typiquement supérieur à 110°C permettant entre autres de pallier d'une part les problèmes de sécurité lors du stockage et du transport en évitant une inflammabilité trop sensible du fluide hydrocarboné.

Le fluide hydrocarboné a aussi de préférence une pression de vapeur à 20°C inférieure ou égale à 0,01kPa.

Selon un mode de réalisation, le fluide hydrocarboné a également de préférence un point éclair supérieur ou égal à 110°C selon la norme EN ISO 2719 et une pression de vapeur à 20°C inférieure ou égale à 0,01kPa. Préférentiellement le fluide hydrocarboné a un point éclair supérieur ou égal à 120°C et une pression de vapeur à 20°C inférieure ou égale à 0,01kPa. Et plus préférentiellement, elle a un point éclair supérieur ou égal à 140°C et une pression de vapeur à 20°C inférieure ou égale à 0,01kPa.

Le fluide hydrocarboné présente des températures d'ébullition, un point éclair et une pression de vapeur permettant de pallier les problèmes d'inflammabilité, d'odeur et de volatilité.

Le fluide hydrocarboné a en outre de préférence une viscosité cinématique à 40°C inférieure ou égale à 5 cSt, préférentiellement inférieure ou égale à 4 cSt et plus préférentiellement inférieure ou égale à 3,5 cSt selon la norme EN ISO 3104.

En particulier, une composition selon l'invention comprend de 80 % à 99,5 %, encore plus préférentiellement de 80% à 98%, avantageusement de 90% à 97% en poids d'au moins un fluide hydrocarboné ayant un point d'ébullition supérieur à 50°C, par rapport au poids total de la composition.

### Procédé d'obtention du fluide hydrocarboné :

De tels fluides hydrocarbonés peuvent être obtenus de la façon suivante. Le fluide hydrocarboné conforme à l'invention est une coupe hydrocarbonée qui est issue de la conversion de la biomasse.

Par « issue de la conversion de la biomasse », on entend dans le cadre de la présente invention une coupe hydrocarbonée produite à partir de matières premières d'origine biologique.

De préférence, la coupe hydrocarbonée d'origine biologique est obtenue par un procédé comprenant des étapes d'hydrodésoxygénation (HDO) et d'isomérisation (ISO). L'étape d'hydrodésoxygénation (HDO) conduit à la décomposition des structures des esters biologiques ou des constituants triglycérides, à l'élimination des composés oxygénés, phosphorés et soufrés et à l'hydrogénation des liaisons oléfiniques. Le produit issu de la réaction d'hydrodésoxygénation est ensuite isomérisé. Une étape de fractionnement peut de préférence suivre les étapes d'hydrodésoxygénation et d'isomérisation. De manière avantageuse, les fractions d'intérêt sont ensuite soumises à des étapes d'hydrotraitement puis de distillation afin obtenir les spécifications du fluide hydrocarboné souhaité selon l'invention.

Ce procédé HDO/ISO est mis en oeuvre sur une charge biologique brute, encore appelée biomasse ou matière première d'origine biologique, sélectionnée dans le groupe consistant en des huiles végétales, des graisses animales, des huiles de poisson et leur mélange. Les matières premières d'origine biologique appropriées sont par exemple l'huile de colza, l'huile de canola, le talloil, l'huile de tournesol, l'huile de soja, l'huile de chanvre, l'huile d'olive, l'huile de lin, l'huile de moutarde, l'huile de palme, l'huile d'arachide, l'huile de ricin, l'huile de noix de coco, les graisses animales telles que le suif, les graisses alimentaires recyclées, les matières premières issues du génie génétique, et les matières premières biologiques produites à partir de microorganismes tels que les algues et les bactéries. Des produits de condensation, esters ou autres dérivés obtenus à partir de matériaux biologiques bruts peuvent également servir de matières premières.

De préférence, la matière première d'origine biologique est un ester ou un dérivé triglycéride. Ce matériau est soumis tout d' abord à une étape d'hydrodésoxygénation (HDO) pour décomposer la structure des esters ou triglycérides constitutifs et éliminer les composés oxygénés, phosphorés et soufrés de manière concomitante à l'hydrogénation des liaisons oléfiniques. Cette étape d'hydrodésoxygénation (HDO) de la matière première d'origine biologique est suivie par une isomérisation du produit ainsi obtenu conduisant à la ramification de la chaîne hydrocarbonée et à une amélioration des propriétés de la paraffine à basses températures.

Durant l'étape HDO, l'hydrogène et la matière première d'origine biologique sont passés sur un lit catalytique d'hydrodésoxygénation de manière simultanée ou à contre-courant. Durant l'étape HDO, la pression et la température sont comprises entre 20 et 150 bars et entre 200 et 500°C respectivement. Des catalyseurs classiques et connus d'hydrodésoxygénation sont utilisés durant cette étape. Éventuellement, la matière première d'origine biologique peut être soumise à une pré-hydrogénation sous conditions douces pour éviter les réactions secondaires des doubles liaisons avant l'étape HDO. Après l'étape d'hydrodésoxygénation, le produit issu de la réaction est soumis à une étape d'isomérisation (ISO) où l'hydrogène et le produit, et éventuellement un mélange de n-paraffines, sont passés sur des lits catalytiques d'isomérisation de manière simultanée ou à contre-courant. Lors de l'étape ISO, la pression et la température sont comprises entre 20 et 150 bars et entre 200 et 500°C respectivement. Des catalyseurs classiques et connus d'isomérisation sont utilisés durant cette étape.

Des procédés secondaires additionnels peuvent également être mise en oeuvre (comme des mélanges intermédiaires, des piégeages ou autres procédés de la sorte).

Le produit issu des étapes HDO/ISO peut éventuellement être fractionné afin d'obtenir les coupes d'intérêt.

Divers procédés HDO/ISO sont décrits dans la littérature. La demande WO2014/033762 décrit un procédé comprenant une étape de pré-hydrogénation, une étape d'hydrodésoxygénation (HDO) et une étape d'isomérisation opérées à contre-courant. La demande de brevet EP1728844 décrit un procédé de production de composés hydrocarbonés à partir d'un mélange de composés d'origine végétale et animale. Ce procédé comprend une étape de prétraitement du mélange permettant d'enlever les contaminants, comme par exemple les sels de métaux alcalins, suivie d'une étape d'hydrodésoxygénation (HDO) et d'une étape d'isomérisation. La demande de brevet EP2084245 décrit un procédé de production d'un mélange hydrocarboné qui peut être utilisé comme gazole ou dans une composition de gazole par hydrodésoxygénation d'un mélange d'origine biologique contenant des esters d'acides gras éventuellement en mélange avec des acides gras libres, par exemple des huiles végétales comme l'huile de tournesol, l'huile de colza, l'huile de canola, l'huile de palme ou l'huile de pin, suivi d'une hydroisomérisation sur des catalyseurs spécifiques. La demande de brevet EP2368967 décrit un tel procédé et le produit obtenu par ce procédé. La demande WO2016/185046 décrit un procédé d'obtention d'un fluide hydrocarboné utilisé selon l'invention, dans lequel le fluide hydrocarboné est obtenu par un procédé d'hydrogénation catalytique à une température allant de 80 °C à 180 °C et à une pression allant de 50 bars à 160 bars d'une charge d'origine biologique désoxygénée et/ou isomérisée. Ce procédé est avantageusement utilisé dans le cadre de l'obtention du fluide hydrocarboné conforme à la présente invention.

Avantageusement, la matière première d'origine biologique contient moins de 15 ppm de soufre, de préférence moins de 8 ppm, préférentiellement moins de 5 ppm et plus préférentiellement moins de 1 ppm selon la norme EN ISO 20846. Idéalement la charge ne comprend pas de soufre en tant que matière première d'origine biosourcée.

Avant l'étape d'hydrotraitement, une étape de préfractionnement peut avoir lieu. Une coupe plus étroite en entrée d'unité d'hydrogénation permet d'obtenir une coupe étroite en sortie d'unité. En effet, les points d'ébullition de coupes préfractionnées sont compris entre 220 et 330 °C tandis que les coupes qui n'ont pas été préfractionnées ont typiquement des points d'ébullition comprise entre 150 et 360°C.

La charge désoxygénée et isomérisée issue du procédé HDO/ISO est ensuite hydrogénée.

L'hydrogène utilisé dans l'unité d'hydrogénation est typiquement de l'hydrogène hautement purifié. On entend par « hautement purifié », de l'hydrogène d'une pureté par exemple supérieure à 99%, même si d'autres grades peuvent également être utilisés.

L'étape d'hydrogénation est effectuée grâce à des catalyseurs. Les catalyseurs d'hydrogénation types peuvent être soit massiques soit supportés et peuvent comprendre les métaux suivants : nickel, platine, palladium, rhénium, rhodium, tungstate de nickel, nickel-molybdène, molybdène, cobalt-molybdène. Les supports peuvent être de la silice, de l'alumine, de la silice-alumine ou des zéolithes.

Un catalyseur préféré est un catalyseur à base de nickel sur support d'alumine dont l'aire de surface spécifique varie entre 100 et 200 m2/g de catalyseur ou un catalyseur massique à base de nickel. Les conditions d'hydrogénation sont typiquement les suivantes :
- Pression : 50 à 160 bars, de préférence 80 à 150 bars et plus préférentiellement 90 à 120 bars ;
- Température : 80 à 180 °C, de préférence 120 à 160 °C et plus préférentiellement 150 à 160 °C ;
- Vitesse volumique horaire (VVH): 0,2 à 5 hr-1, de préférence 0,4 à 3 hr-1 et plus préférentiellement 0,5 à 0,8 hr-1 ;
- Taux de traitement par l'hydrogène : adapté aux conditions mentionnées ci-dessus et pouvant aller jusqu'à 200 Nm3/tonnes de charge à traiter.

La température dans les réacteurs est typiquement comprise entre 150 et 160°C avec une pression d'environ 100 bars tandis que la vitesse volumique horaire est d'environ 0,6 hr-1 avec un taux de traitement adapté en fonction de la qualité de la charge à traiter et des paramètres du premier réacteur d'hydrogénation.

L'hydrogénation peut avoir lieu dans un ou plusieurs réacteurs en série. Les réacteurs peuvent comprendre un ou plusieurs lits catalytiques. Les lits catalytiques sont généralement des lits catalytiques fixes.

Le procédé d'hydrogénation comprend de préférence deux ou trois réacteurs, de préférence trois réacteurs et est plus préférentiellement réalisé dans trois réacteurs en série.

Le premier réacteur permet le piégeage des composés soufrés et l'hydrogénation d'essentiellement tous les composés insaturés et jusqu'à environ 90 % des composés aromatiques. Le produit issu du premier réacteur ne contient substantiellement aucun composé soufré. Au second stade c'est-à-dire dans le second réacteur, l'hydrogénation des aromatiques se poursuit et jusqu'à 99 % des aromatiques sont de ce fait hydrogénés.

Le troisième stade dans le troisième réacteur est un stade de finition permettant d'obtenir des teneurs en aromatiques inférieures ou égales à 500 ppm, de préférence inférieures ou égales à 300 ppm, préférentiellement inférieures ou égales à 100 ppm, plus préférentiellement inférieures ou égales à 50 ppm, et idéalement inférieures ou égales à 20 ppm même dans le cas de produits à haut point d'ébullition par exemple supérieur à 300°C.

Il est possible d'utiliser un réacteur qui comporte deux ou trois lits catalytiques ou plus. Les catalyseurs peuvent être présents à des quantités variables ou essentiellement égales dans chaque réacteur ; pour trois réacteurs, les quantités en fonction du poids peuvent par exemple être de 0,05-0,5/0,10-0,70/0,25-0,85, de préférence 0,07-0,25/0,15-0,35/0,4-0,78 et plus préférentiellement de 0,10-0,20/0,20-0,32/0,48-0,70.

Il est également possible d'utiliser un ou deux réacteurs d'hydrogénation au lieu de trois.

Il est également possible que le premier réacteur soit composé de réacteurs jumeaux mis en oeuvre de manière alternative. Ce mode d'opérabilité permet notamment un chargement et un déchargement facilité des catalyseurs : lorsque le premier réacteur comprend le catalyseur saturé en premier (substantiellement tout le soufre est piégé sur et/ou dans le catalyseur) il doit être changé souvent.

Un seul réacteur peut également être utilisé dans lequel deux, trois lits catalytiques ou plus sont installés.

Il peut être nécessaire d'insérer des boîtes de quench (au sens anglais « d'étouffement de la réaction ») dans le système de recycle ou entre les réacteurs pour refroidir les effluents d'un réacteur à un autre ou d'un lit catalytique à un autre afin de contrôler les températures et l'équilibre hydrothermique de chaque réaction. Selon un mode de réalisation préféré, il n'y a pas d'intermédiaires de refroidissement ou d'étouffement.

Selon un mode de réalisation, le produit issu du procédé et/ou les gaz séparés sont au moins en partie recyclé(s) dans le système d'alimentation des réacteurs d'hydrogénation. Cette dilution contribue à maintenir l'exothermicité de la réaction dans des limites contrôlées, en particulier au premier stade. Le recyclage permet en outre un échange de chaleur avant la réaction et aussi un meilleur contrôle de la température.

L'effluent de l'unité d'hydrogénation contient principalement le produit hydrogéné et de l'hydrogène. Des séparateurs flash sont utilisés pour séparer les effluents en phase gazeuse, principalement l'hydrogène résiduel, et en phase liquide, principalement les coupes hydrocarbonées hydrogénées. Le procédé peut être effectué en utilisant trois séparateurs flash, un à pression élevée, un à pression intermédiaire et un à basse pression très proche de la pression atmosphérique.

L'hydrogène gazeux qui est recueilli en haut des séparateurs flash peut être recyclé dans le système d'alimentation de l'unité d'hydrogénation ou à différents niveaux dans les unités d'hydrogénation entre les réacteurs.

Selon un mode de réalisation, le produit final est séparé à pression atmosphérique. Il alimente ensuite directement une unité de fractionnement sous vide. De préférence, le fractionnement se fera à une pression comprise entre 10 et 50 mbars et plus préférentiellement à environ 30 mbars.

Le fractionnement peut être effectué de façon à ce qu'il soit possible de retirer simultanément divers fluides hydrocarbonés de la colonne de fractionnement et à ce que leur température d'ébullition puisse être prédéterminée.

En adaptant la charge au travers de ses points d'ébullition initiaux et finaux, les réacteurs d'hydrogénation, les séparateurs et l'unité de fractionnement peuvent donc être directement connectés sans qu'il soit nécessaire d'utiliser des cuves intermédiaires. Cette intégration de l'hydrogénation et du fractionnement permet une intégration thermique optimisée associée à une réduction du nombre d'appareils et à une économie d'énergie.

Le fluide hydrocarboné conforme à l'invention présentant une teneur en carbone d'origine biologique supérieure ou égale à 90% en poids, par rapport au poids total de l'huile hydrocarbonée est idéalement issue du traitement de matières premières d'origine biologique. Le carbone d'un biomatériau provient de la photosynthèse des plantes et donc du CO₂ atmosphérique. La dégradation (par dégradation, on comprend également la combustion / l'incinération en fin de vie) de ces matériaux de CO₂ ne contribue donc pas au réchauffement car il n'y a pas d'augmentation du carbone émis dans l'atmosphère. L'évaluation du CO₂ des biomatériaux est donc nettement meilleure et contribue à réduire l'empreinte carbone des produits obtenus (seule l'énergie pour la fabrication doit être prise en compte). Au contraire, un matériau fossile d'origine également dégradé en CO₂ contribuera à l'augmentation du taux de CO₂ et donc au réchauffement climatique. Le fluide hydrocarboné mis en oeuvre selon l'invention aura donc une empreinte carbone qui sera meilleure que celle des composés obtenus à partir d'une source fossile.

Le terme de « bio-carbone » indique que le carbone est d'origine naturelle et vient d'un biomatériau, comme indiqué ci-après. La teneur en bio-carbone et la teneur en biomatériau sont des expressions indiquant la même valeur. Un matériau d'origine renouvelable ou biomatériau est un matériau organique dans lequel le carbone est issu du CO₂ fixé récemment (sur une échelle humaine) par photosynthèse à partir de l'atmosphère. Un biomatériau (Carbone 100% d'origine naturelle) présente un rapport isotopique ¹⁴C/¹²C supérieur à 10-12, typiquement environ 1,2 x 10-12, tandis qu'un matériau fossile a un rapport nul. En effet, le ¹⁴C isotopique est formé dans l'atmosphère et est alors intégré par photosynthèse, selon une échelle de temps de quelques dizaines d'années au maximum. La demi-vie du ¹⁴C est 5730 années. Ainsi, les matériaux issus de la photosynthèse, à savoir les plantes d'une manière générale, ont nécessairement un contenu maximum en isotope ¹⁴C.

La détermination de la teneur en biomatériau ou en bio-carbone est donnée conformément aux normes ASTM D 6866-12, la méthode B (ASTM D 6866-06) et ASTM D 7026 (ASTM D 7026-04). La norme ASTM D 6866 concerne la «détermination du contenu à base de substances biologiques de matériaux de la gamme naturelle utilisant l'analyse de la spectrométrie de masse du rapport des radiocarbures et des isotopes», tandis que la norme ASTM D 7026 concerne «l'échantillonnage et la déclaration des résultats pour la détermination du contenu à base de substances biologiques par analyse des isotopes du carbone». La deuxième norme mentionne le premier dans son premier paragraphe.

La première norme décrit un test de mesure du rapport ¹⁴C/¹²C d'un échantillon et le compare avec le rapport ¹⁴C/¹²C d'un échantillon de référence d'origine 100% renouvelable, pour donner un pourcentage relatif de C d'origine renouvelable dans l'échantillon. La norme est basée sur les mêmes concepts que la datation avec ¹⁴C, mais sans appliquer les équations de datation. Le ratio ainsi calculé est indiqué comme «pMC» (pourcentage Modem Carbon). Si le matériau à analyser est un mélange de biomatériaux et de matériaux fossiles (sans isotope radioactif), la valeur de pMC obtenue est directement corrélée à la quantité de biomatériau présent dans l'échantillon. La valeur de référence utilisée pour la datation de 14C est une valeur datant des années 1950. Cette année a été sélectionnée en raison de l'existence d'essais nucléaires dans l'atmosphère qui ont introduit de grandes quantités d'isotopes dans l'atmosphère après cette date. La référence 1950 correspond à une valeur pMC de 100. Compte tenu des tests thermonucléaires, la valeur actuelle à retenir est d'environ 107,5 (ce qui correspond à un facteur de correction de 0,93). La signature en carbone radioactif d'une plante actuelle est donc de 107,5. Une signature de 54 pMC et 99 pMC correspond donc à une quantité de biomatériau dans l'échantillon de 50% et 93% respectivement.

Le fluide hydrocarboné conforme à l'invention présente une teneur en biomatériau d'au moins 90%. Cette teneur est avantageusement plus élevée, en particulier supérieure ou égale à 95%, préférablement supérieure ou égale à 98% et avantageusement égale à 100%.

Selon un mode de réalisation, le rapport isotopique ¹⁴C/¹²C du fluide hydrocarboné mis en oeuvre dans l'invention est compris entre 1,15 et 1,2 × 10 ¹².

En plus d'une teneur particulièrement élevée en biomatériau, le fluide hydrocarboné conforme à l'invention possède une biodégradabilité particulièrement bonne. La biodégradation d'un produit chimique organique se réfère à la réduction de la complexité des composés chimiques grâce à l'activité métabolique de micro-organismes. Dans des conditions aérobies, les micro-organismes transforment les substances organiques en dioxyde de carbone, eau et biomasse. La méthode OCDE 306, est utilisée pour l'évaluation de la biodégradabilité des substances individuelles dans l'eau de mer. Selon cette méthode, le fluide hydrocarboné a une biodégradabilité à 28 jours d'au moins 60%, de préférence d'au moins 70%, plus préférablement d'au moins 75% et avantageusement d'au moins 80%.

La méthode OCDE 306 est la suivante :
La méthode de la bouteille fermée consiste à dissoudre une quantité prédéterminée de la substance à tester dans un milieu de contrôle à une concentration traditionnellement de 2-10 mg/L, une ou plusieurs concentrations étant éventuellement utilisées. La solution est maintenue dans une bouteille fermée remplie à l'abri de la lumière à une température constante dans la gamme 15-20°C. La dégradation est suivie par analyse de l'oxygène sur une période de 28 jours. 24 bouteilles sont utilisées (8 pour la substance à tester, 8 pour le composé de référence et 8 pour les nutriments). Toutes les analyses sont effectuées sur plusieurs bouteilles. Au moins 4 déterminations d'oxygène dissous sont effectuées (jour 0, 5, 15 et 20) en utilisant une méthode chimique ou électrochimique.

Selon un mode de réalisation particulier de l'invention, le fluide hydrocarboné comprend :
- une teneur en poids d'isoparaffines allant de 95 à 100% et préférentiellement de 98% à 100% par rapport au poids total du fluide hydrocarboné, et
- une teneur en poids de paraffines normales inférieure ou égale à 5% et préférentiellement inférieure ou égale à 2% par rapport au poids total du fluide hydrocarboné ; et
- une teneur en poids de composés naphténiques inférieure ou égale à 0,5% et préférentiellement inférieure ou égale à 100 ppm par rapport au poids total du fluide hydrocarboné ; et
- une teneur en poids de composés aromatiques inférieure ou égale à 300 ppm, préférentiellement inférieure ou égale à 100 ppm, plus préférentiellement inférieure ou égale à 50 ppm et avantageusement inférieure ou égale à 20 ppm, par rapport au poids total du fluide hydrocarboné.

Selon un mode de réalisation particulier de l'invention, le fluide hydrocarboné comprend une teneur en poids d'isoparaffines allant de 98 % à 100 %, par rapport au poids total du fluide hydrocarboné, et une viscosité cinématique à 40 °C inférieure ou égale à 5 cSt, de préférence inférieure ou égale à 4 cSt, et préférentiellement inférieure ou égale à 3,5 cSt.

### Retardateur de flammes

Dans le cadre de la présente invention, au moins un retardateur de flammes est incorporé dans la composition refroidissante d'un système de propulsion d'un véhicule électrique ou hybride, répondant à la formule (I)

R_{F}-L-R_{H} (I)

dans laquelle
R_{F} est un groupe perfluoré ou partiellement fluoré,
R_{H} est un groupe hydrocarboné, et
L est un linker.

Dans le cadre de la présente invention, le terme « groupe partiellement fluoré » signifie qu'au moins 60% des atomes d'hydrogène dans le groupe concerné ont été remplacés par des atomes de fluor, par exemple entre 60 et 80%.

Sans que la demanderesse ne soit tenue par aucune théorie, il est décrit que la présence d'au moins un retardateur de flammes de formule (I) est apte à former des micelles dans la composition refroidissement. En cas de chauffage susceptible d'être provoqué par un feu, les micelles seront présentes à la surface de la composition, permettant de lutter contre le feu.

Selon un mode de réalisation particulier, le groupe R_{F} comporte entre 1 et 22, de préférence entre 1 et 20, plus particulièrement entre 1 et 16 atomes de carbone. Ledit groupe peut éventuellement être interrompu par 1 à 4 hétéroatomes choisis parmi un atome d'azote et un atome d'oxygène. Ce groupe peut par ailleurs être linéaire ou ramifié.

Avantageusement il s'agit d'un groupe (C₁-C₁₆)alkyle perfluoré ou partiellement fluoré éventuellement interrompu par un ou deux hétéroatomes choisis parmi un atome d'azote et un atome d'oxygène.

Un tel groupe R_{F} peut par exemple être choisi parmi les groupes suivants :
- CF3(CF2)ₘ-,
- C(CF3)3(CF2)ₘ-,
- (CF3)2CF(CF2)ₘ-,
- (CF₃)₂CF-, et
- (CF₃)CF₂-,
- (CF₃)(CF₂)₃-,
avec m étant un nombre entier pouvant être compris entre 1 et 15, m étant un nombre entier compris entre 0 et 14.

Ces exemples ne sont pas limitatifs. Selon un mode de réalisation particulier, le groupe R_{H} peut comprendre entre 1 et 4 hétéroatomes choisis parmi un atome d'azote et un atome d'oxygène. Ce groupe peut par ailleurs être linéaire ou ramifié. Il peut par ailleurs être saturé ou comprendre de 1 à 4 insaturations.

Le groupe R_{H} comporte entre 3 et 22 atomes de carbone, plus préférentiellement entre 3 et 18, par exemple entre 5 et 15, voire entre 10 et 15 atomes de carbone.

Avantageusement il s'agit d'un groupe (C₃-C₁₅)alkyle ou (C₃-C₁₅)alkényle, ledit groupe étant éventuellement substitué par un cycle hydrocarboné tel que le groupe (C₃-C₆)cycloalkyle, phényle ou benzyle.

Un tel groupe R_{H} peut notamment être choisi parmi les groupes suivants, sans toutefois s'y limiter :
- -(CH₂)ₙCH₃,
- -(CH₂)ₚC₆H₄,
- -(CH₂)_{q}O(CH₂)ᵣCH₃, et
- -(CH₂)ₛC=C(CH₂)ₜCH₃
avec n étant un nombre entier pouvant être compris 2 et 21, en particulier entre 7 et 21, p étant compris entre 1 et 16, en particulier entre 2 et 10, q et r étant indépendamment compris entre 1 et 16, avec q+r étant inférieur ou égal à 21 et avantageusement supérieur à 7, s et t étant indépendamment compris entre 1 et 16, avec s+t étant inférieur ou égal à 19 et avantageusement supérieur à 5.

Le linker L peut notamment être choisi parmi les groupes divalents suivants : -CH₂-, -CH=CH-, -O-, -S- ou -PO₄-.

Selon un mode de réalisation particulier, le retardateur de flammes peut être choisi parmi les composés de formule (I) dans laquelle R_{F} est un groupe (C₂-C₁₂)alkyle perfluoré ou partiellement fluoré, R_{H} est un groupe (C₃-C₁₂)alkyle, en particulier (C₆-C₁₂) alkyle ou (C₃-C₁₂)alkényle, en particulier (C₆-C₁₂)alkényle, ledit groupe étant éventuellement substitué par un cycle hydrocarboné tel que le groupe (C₃-C₆)cycloalkyle, phényle ou benzyle, et ledit groupe pouvant être interrompu par 1 ou 2 hétéroatomes choisis parmi l'azote ou l'oxygène, et L est un linker choisi parmi -CH₂-, -CH=CH- et -O-.

Il est entendu dans le cadre de la présente invention que le retardateur de flammes de formule (I) telle que définie précédemment peut être sous forme d'un mélange de retardateurs de flammes de formule (I) telle que définie précédemment.

Dans le cadre de la présente invention, les termes suivants sont définis comme suit :
- "(C₃-Cₓ) alkyle", se réfère à une chaîne hydrocarbonée saturée comportant de 3 à x atomes de carbone, linéaire ou ramifiée, par exemple un groupe (C₃-C₁₂)alkyle. A titre d'exemples non limitatifs on peut citer les groupes suivants : 1-propyle, 2-propyle, butyle, pentyle, hexyle, heptyle, et décyle,
- "(C₃-Cₓ) alkényle", se réfère à une chaîne hydrocarbonée présentant des insaturations et comportant de 3 à x atomes de carbone, linéaire ou ramifiée, par exemple un groupe (C₃-C₁₂)alkényle. A titre d'exemples non limitatifs on peut citer les groupes suivants : propylène, butylène, pentylène, héxylène et décylène
- "(C₃-C₆)cycloalkyle", à une chaîne hydrocarbonée saturée et cyclique. A titre d'exemples non limitatifs on peut citer les groupes suivants : cyclopropyle, cyclobutyle, cyclopentyle et cyclohexyle.

Selon la présente invention, le ou les retardateur(s) de flammes de formule (I) peu(ven)t être présent(s) dans une teneur supérieure ou égale à 0,5 % en poids, par rapport au poids total de la composition conforme à la présente invention, en particulier dans une teneur supérieure à 2 % en poids, encore plus particulièrement dans une teneur comprise entre 2 % et 20 % en poids, avantageusement entre 3 % et 10 % en poids.

En termes de formulation de la composition selon la présente invention, toutes les méthodes connues de l'homme de l'art peuvent être utilisées pour cette additivation du fluide hydrocarboné par au moins un retardateur de flammes.

La composition refroidissante conforme à l'invention peut en outre comprendre au moins un inhibiteur de radicaux.

De tels inhibiteurs de radicaux sont en soi connus de l'homme de l'art et peuvent avoir différentes natures chimiques et en particulier appartenir à différentes familles chimiques.

En termes de formulation de la composition selon la présente invention, toutes les méthodes connues de l'homme de l'art peuvent être utilisées pour cette additivation du fluide.

Parmi les inhibiteurs de radicaux, on peut notamment citer les inhibiteurs de radicaux phosphorés.

Parmi les inhibiteurs de radicaux phosphorés on distingue les composés pour lesquels le phosphore est un P(V) ou phosphore pentavalent et les composés pour lesquels le phosphore est un P(III) ou phosphore trivalent.

Parmi ces composés se présentant sous la forme d'un phosphore pentavalent, P(V), on peut notamment citer la famille des phosphates et en particulier, le triéthylphosphate, le triméthylphosphate, les alkylphosphates éventuellement fluorés ou encore les arylphosphates.

A titre d'alkylphosphate fluoré on peut notamment citer le tris (2,2,2-trifluoroéthyl)phosphate.

A titre d'arylphosphates, on peut notamment citer le triphénylphosphate, le tricresylphosphate ou encore le trixylenylphosphate.

Toujours parmi ces composés se présentant sous la forme P(V), on peut notamment citer la famille des phosphazènes. Dans cette famille, qui se caractérise par le fait que ses représentants comportent au moins une double liaison entre un atome de phosphore pentavalent et un atome d'azote, on privilégie les composés cycliques. On peut notamment citer l'hexaméthoxycyclotriphosphazène.

Parmi ces composés se présentant sous la forme d'un phosphore trivalent, P(III), on peut notamment citer la famille des phosphites. Dans cette famille, on peut notamment citer le tris(2,2,2-trifluoroéthyl)phosphite.

Une composition refroidissante conforme à l'invention peut en outre comprendre au moins un retardateur de flammes additionnel, différent de l'agent retardateur de flammes de formule (I) décrit plus haut.

Parmi ces autres retardateurs de flammes on peut notamment citer des composés halogénés autres que fluorés.

Il appartient à l'homme du métier d'ajuster les proportions des différents constituants de la composition, notamment de la base fluide, de l'agent retardateur de flammes de formule (I) telle que définie précédemment et éventuellement de l'inhibiteur de radicaux et/ou des retardateurs de flammes additionnels pour respecter la viscosité requise selon l'invention, et éventuellement la densité de la composition.

Le ou les retardateur(s) de flammes de formule (I) telle que définie précédemment et éventuellement l'inhibiteur de radicaux et/ou les retardateurs de flammes additionnels peu(ven)t être incorporé(s) directement dans le fluide hydrocarboné conforme à la présente invention.

Selon un mode de réalisation particulier, une composition refroidissante selon l'invention comprend au moins un fluide hydrocarboné présentant une teneur supérieure ou égale à 90 % en poids, en particulier supérieure ou égale à 95 % en poids, et encore plus avantageusement supérieure ou égale à 98 % en poids d'isoparaffines, par rapport au poids total en fluide hydrocarboné, au moins un agent retardateur de flammes de formule (I) telle que définie précédemment et optionnellement au moins un inhibiteur de radicaux phosphoré.

Selon un mode de réalisation particulier, une composition refroidissante selon l'invention comprend au moins un fluide hydrocarboné présentant une teneur en poids d'isoparaffines allant de 98 % à 100 %, par rapport au poids total du fluide hydrocarboné, et une viscosité cinématique à 40 °C inférieure ou égale à 5 cSt, de préférence inférieure ou égale à 4 cSt, et préférentiellement inférieure ou égale à 3,5 cSt, au moins un agent retardateur de flammes de formule (I) telle que définie précédemment et optionnellement un inhibiteur de radicaux phosphoré, notamment tel que plus particulièrement décrit précédemment.

Alternativement, une composition selon l'invention peut comprendre en outre un ou plusieurs additifs tels que définis plus précisément dans la suite du texte.

### Autres additifs

Selon une variante de l'invention, la composition refroidissante selon la présente invention comprend en outre des additifs modulant les propriétés du fluide hydrocarboné.

Les additifs pouvant être incorporés à une composition selon l'invention peuvent être choisis parmi les détergents, les dispersants, les antioxydants, les améliorants du point d'écoulement, les anti-mousse et leurs mélanges.

Il est entendu que la nature et la quantité d'additifs mis en oeuvre sont choisies de manière à ne pas affecter les propriétés combinées de pouvoir refroidissant de la composition selon l'invention et de protection au feu.

Une composition refroidissante selon l'invention peut comprendre au moins un additif antioxydant.

L'additif antioxydant permet généralement de retarder la dégradation de la composition en service. Cette dégradation peut notamment se traduire par la formation de dépôts, par la présence de boues ou par une augmentation de la viscosité de la composition.

Les additifs antioxydants agissent notamment comme inhibiteurs radicalaires ou destructeurs d'hydropéroxydes. Parmi les additifs antioxydants couramment employés, on peut citer les additifs antioxydants de type phénolique, les additifs antioxydants de type aminé, les additifs antioxydants phosphosoufrés. Certains de ces additifs antioxydants, par exemple les additifs antioxydants phosphosoufrés, peuvent être générateurs de cendres. Les additifs antioxydants phénoliques peuvent être exempt de cendres ou bien être sous forme de sels métalliques neutres ou basiques. Les additifs antioxydants peuvent notamment être choisis parmi les phénols stériquement encombrés, les esters de phénol stériquement encombrés et les phénols stériquement encombrés comprenant un pont thioéther, les diphénylamines, les diphénylamines substituées par au moins un groupement alkyle en C₁-C₁₂, les N,N'-dialkyle-aryle-diamines et leurs mélanges.

De préférence selon l'invention, les phénols stériquement encombrés sont choisis parmi les composés comprenant un groupement phénol dont au moins un carbone vicinal du carbone portant la fonction alcool est substitué par au moins un groupement alkyle en C₁- C₁₀, de préférence un groupement alkyle en C₁-C₆, de préférence un groupement alkyle en C₄, de préférence par le groupement ter-butyle.

Les composés aminés sont une autre classe d'additifs antioxydants pouvant être utilisés, éventuellement en combinaison avec les additifs antioxydants phénoliques. Des exemples de composés aminés sont les amines aromatiques, par exemple les amines aromatiques de formule NR⁴R⁵R⁶ dans laquelle R⁴ représente un groupement aliphatique ou un groupement aromatique, éventuellement substitué, R⁵ représente un groupement aromatique, éventuellement substitué, R⁶ représente un atome d'hydrogène, un groupement alkyle, un groupement aryle ou un groupement de formule R⁷S(O)_{z}R⁸ dans laquelle R⁷ représente un groupement alkylène ou un groupement alkenylène, R⁸ représente un groupement alkyle, un groupement alcényle ou un groupement aryle et z représente 0, 1 ou 2.

Des alkyl phénols sulfurisés ou leurs sels de métaux alcalins et alcalino-terreux peuvent également être utilisés comme additifs antioxydants.

Une autre classe d'additifs antioxydants est celle des composés cuivrés, par exemples les thio- ou dithio-phosphates de cuivre, les sels de cuivre et d'acides carboxyliques, les dithiocarbamates, les sulphonates, les phénates, les acétylacétonates de cuivre. Les sels de cuivre I et II, les sels d'acide ou d'anhydride succiniques peuvent également être utilisés.

Une composition refroidissante selon l'invention peut contenir tous types d'additifs antioxydants connus de l'homme du métier.

De manière avantageuse, une composition refroidissante selon l'invention comprend au moins un additif antioxydant exempt de cendres.

Une composition refroidissante selon l'invention peut comprendre de 0,5 à 2 % en poids d'au moins un additif antioxydant, par rapport à la masse totale de la composition.

Une composition refroidissante selon l'invention peut également comprendre au moins un additif détergent.

Les additifs détergents permettent généralement de réduire la formation de dépôts à la surface des pièces métalliques par dissolution des produits secondaires d'oxydation et de combustion.

Les additifs détergents utilisables dans une composition refroidissante selon l'invention sont généralement connus de l'homme de métier. Les additifs détergents peuvent être des composés anioniques comprenant une longue chaîne hydrocarbonée lipophile et une tête hydrophile. Le cation associé peut être un cation métallique d'un métal alcalin ou alcalino-terreux.

Les additifs détergents sont préférentiellement choisis parmi les sels de métaux alcalins ou de métaux alcalino-terreux d'acides carboxyliques, les sulfonates, les salicylates, les naphténates, ainsi que les sels de phénates. Les métaux alcalins et alcalino-terreux sont préférentiellement le calcium, le magnésium, le sodium ou le baryum.

Ces sels métalliques comprennent généralement le métal en quantité stoechiométrique ou bien en excès, donc en quantité supérieure à la quantité stoechiométrique. Il s'agit alors d'additifs détergents surbasés ; le métal en excès apportant le caractère surbasé à l'additif détergent est alors généralement sous la forme d'un sel métallique insoluble dans l'huile, par exemple un carbonate, un hydroxyde, un oxalate, un acétate, un glutamate, préférentiellement un carbonate.

Une composition refroidissante selon l'invention peut par exemple comprendre de 2 à 4 % en poids d'additif détergent, par rapport à la masse totale de la composition.

Une composition refroidissante selon l'invention peut également comprendre au moins un additif abaisseur de point d'écoulement.

En ralentissant la formation de cristaux de paraffine, les additifs abaisseurs de point d'écoulement améliorent généralement le comportement à froid de la composition.

Comme exemple d'additifs abaisseurs de point d'écoulement, on peut citer les polyméthacrylates d'alkyle, les polyacrylates, les polyarylamides, les polyalkylphénols, les polyalkylnaphtalènes, les polystyrènes alkylés.

Également, une composition refroidissante selon l'invention peut comprendre au moins un agent dispersant.

L'agent dispersant peut être choisi parmi les bases de Mannich, les succinimides et leurs dérivés.

Une composition refroidissante selon l'invention peut par exemple comprendre de 0,2 à 10 % en poids d'agent dispersant, par rapport à la masse totale de la composition.

Comme mentionné ci-dessus, l'eau n'est pas compatible avec un contact direct avec un système de propulsion de véhicule électrique ou hybride, tel que le moteur, l'électronique de puissance et la batterie.

Ainsi, une composition selon l'invention est exempte d'eau. Par « *exempte d'eau* » au sens de la présente invention, on entend que la composition comprend moins de 1 % en poids d'eau, de préférence moins de 0,1 % en poids, ne comprend pas d'eau.

La composition selon l'invention comprend au moins un retardateur de flammes répondant à la formule (I) définie ci-dessus, dans laquelle R_{H} comporte entre 3 et 22 atomes de carbone, plus préférentiellement entre 3 et 18, par exemple entre 5 et 15, voire entre 10 et 15 atomes de carbone et au moins un fluide hydrocarboné ayant un point d'ébullition supérieur ou égal à 50°C présent en une teneur supérieure ou égale à 80 % en poids, de préférence allant de 80 % à 99,5 % en poids, par rapport au poids total de la composition.

Selon un autre mode de réalisation particulier, une composition selon l'invention comprend, voire consiste en :
- de 80 % à 99,5 % en poids, de préférence entre 80 % et 98 % en poids, plus préférentiellement de 90 % à 97 % en poids d'au moins un fluide hydrocarboné ayant un point d'ébullition supérieur ou égal à 50 °C, de préférence choisi parmi les hydrocarbures comprenant au moins 8 atomes de carbone, par exemple entre 8 et 22 atomes de carbone ;
- au moins 0,5 % en poids, de préférence au moins 2 % en poids, plus préférentiellement de 2 % à 20 % en poids, d'un ou plusieurs retardateur de flamme répondant à la formule (I), en particulier dans laquelle R_{F} est un groupe (C₂-C₁₂)alkyle perfluoré ou partiellement fluoré, R_{H} est un groupe (C₆-C₁₂) alkyle, (C₆-C₁₂)alkényle, ledit groupe étant éventuellement substitué par un groupe (C₃-C₆)cycloalkyle, phényle ou benzyle, et ledit groupe pouvant être interrompu par 1 ou 2 hétéroatomes choisis parmi l'azote ou l'oxygène, et L est un linker choisi parmi -CH₂-, -CH=CH- et -O- ; et
- éventuellement de 0,1 % à 10 % en poids d'un ou plusieurs additifs choisi(s) parmi les inhibiteurs de radicaux phosphorés, les détergents, les dispersants, les antioxydants, les améliorants du point d'écoulement, les anti-mousse et leurs mélanges,
les teneurs étant exprimées par rapport au poids total de la composition.

### APPLICATION

Comme indiqué précédemment, une composition selon l'invention peut être mise en oeuvre, de par ses propriétés conjointes en termes de refroidissement et de retardateur de feu, à la fois comme fluide de refroidissement pour un système de propulsion d'un véhicule électrique ou hybride, et plus particulièrement de l'électronique de puissance et des batteries, et comme fluide retardant et/ou évitant la propagation du feu pour les batteries.

De manière avantageuse, la composition selon l'invention est mise en contact avec la batterie, par immersion ou semi-immersion pour jouer son double rôle vis-à-vis des batteries de refroidissement et de protection anti-feu.

Par « immersion » on entend que l'intégralité de la batterie est entourée de la composition refroidissante selon la présente invention. Par « semi-immersion » on entend qu'une partie seulement de la batterie est au contact avec ladite composition.

Alternativement, la composition refroidissante selon l'invention est avantageusement mise en contact direct avec les batteries par des méthodes décrites ci-après.

A titre de batteries adaptées pour les systèmes de propulsion d'un véhicule électrique ou hybride, on cite les batteries Li-ion ou encore les batteries au Nickel-Cadmium.

Un moteur électrique est typiquement alimenté par une batterie électrique (2). Les batteries lithium-ion sont les plus répandues dans le domaine des véhicules électriques. Le développement de batteries de plus en plus puissantes et dont la taille est de plus en plus réduite implique l'apparition du problème de refroidissement de cette batterie. En effet, dès lors que la batterie dépasse des températures de l'ordre de 50 à 60°C, il existe un fort risque d'inflammation, voire d'explosion, de la batterie. Il existe également un besoin de maintenir la batterie à une température supérieure à environ 20 à 25°C afin d'éviter que la batterie ne se décharge trop rapidement et afin de prolonger sa durée de vie.

Une composition de l'invention peut ainsi être mise en oeuvre pour refroidir la batterie d'un véhicule électrique ou hybride et pour retarder et/ou éviter la propagation du feu.

Comme représenté schématiquement en Figure 1, le système de propulsion d'un véhicule électrique ou hybride, comprend notamment la partie moteur électrique (1). Celui-ci comprend typiquement une électronique de puissance (11) reliée à un stator (13) et un rotor (14).

Le stator comprend des bobines, en particulier des bobines de cuivre, qui sont alimentées alternativement par un courant électrique. Ceci permet de générer un champ magnétique tournant. Le rotor comprend lui-même des bobines, des aimants permanents ou d'autres matériaux magnétiques, et est mis en rotation par le champ magnétique tournant.

L'électronique de puissance (11), le stator (13) et le rotor (14) d'un système de propulsion (1) sont des pièces dont la structure est complexe et génère une forte quantité de chaleur au cours du fonctionnement du moteur. Il est donc impératif d'assurer un refroidissement du moteur électrique, et l'électronique de puissance.

Un roulement (12) est généralement intégré entre le stator (13) et le rotor (14)

Un système de propulsion d'un véhicule électrique ou hybride comprend également une transmission, et en particulier un réducteur de vitesse (3) qui permet de réduire la vitesse de rotation en sortie du moteur électrique et d'adapter la vitesse transmise aux roues, permettant dans le même temps de contrôler la vitesse du véhicule.

Ainsi, l'invention concerne l'utilisation d'une composition telle que décrite précédemment pour refroidir la batterie et l'électronique de puissance et pour sécuriser contre le feu un système de propulsion d'un véhicule électrique ou hybride, et notamment la batterie.

Ainsi, l'invention présente l'avantage de permettre la mise en oeuvre d'une unique composition associant les propriétés de refroidissement et ignifugeantes ou de retardateur de flammes, à titre de fluide de refroidissement et de protection au feu d'une batterie dans un véhicule électrique ou hybride, tout en assurant une fonction de refroidissement de l'électronique de puissance d'un véhicule électrique ou hybride.

L'invention concerne encore un procédé de refroidissement et d'ignifugation d'une batterie d'un système de propulsion d'un véhicule électrique ou hybride comprenant au moins une étape de mise en contact d'au moins une batterie, en particulier une batterie Lithium-ion ou Nickel-Cadmium, avec une composition telle que définie ci-dessus.

Selon un mode de réalisation particulier, l'étape de mise en contact consiste en une immersion ou en une semi-immersion de la batterie dans ladite composition ou encore en une injection de ladite composition à la surface de la batterie.

L'ensemble des caractéristiques et préférences décrites pour la composition refroidissante selon l'invention ainsi que pour ses utilisations s'applique également à ce procédé.

Le refroidissement par une composition selon l'invention peut être mise en oeuvre par toute méthode connue de l'homme du métier.

La batterie peut être en immersion ou semi-immersion, statique ou en circulation, dans ladite composition.

Comme exemples de mise en contact direct, on peut citer le refroidissement par injection, jet, par sprayage ou encore par formation d'un brouillard à partir de la composition selon l'invention sous pression et par gravité sur la batterie.

De manière avantageuse, la composition est injectée par jet sous assez haute pression dans les zones à refroidir du système de propulsion. Avantageusement, le cisaillement résultant de cette injection permet de réduire la viscosité du fluide au niveau de la zone d'injection, par rapport à la viscosité cinématique au repos, et ainsi, d'accroître encore le potentiel refroidissement de la composition.

## Revendications

1. Composition de refroidissement d'un système de propulsion d'un véhicule électrique ou hybride, et plus particulièrement de son électronique de puissance et de ses batteries, comprenant
(i) au moins un fluide hydrocarboné ayant un point d'ébullition supérieur ou égal à 50°C, et
(ii) au moins un retardateur de flammes répondant à la formule (I)
R_{F}-L-R_{H} (I)
dans laquelle
R_{F} est un groupe perfluoré ou partiellement fluoré, en particulier comportant de 1 à 22, de préférence de 1 à 20, encore plus préférentiellement de 1 à 16 atomes de carbone,
R_{H} est un groupe hydrocarboné comportant entre 3 et 22 atomes de carbone, plus préférentiellement entre 3 et 18, par exemple entre 5 et 15, voire entre 10 et 15 atomes de carbone, et
L est un linker,
le fluide hydrocarboné ayant un point d'ébullition supérieur ou égal à 50°C étant présent dans la composition en une teneur supérieure ou égale à 80 % en poids, de préférence allant de 80 % à 99,5 % en poids, par rapport au poids total de la composition ;
ledit retardateur de flammes de formule (I) étant présent dans une teneur supérieure ou égale à 0.5 % en poids, par rapport au poids total de la composition ;
ladite composition étant exempte d'eau.

2. Composition selon la revendication 1, **caractérisée en ce que** le fluide hydrocarboné a un point d'ébullition compris entre 50 °C et 350 °C, en particulier entre 60 °C et 250 °C, et encore plus particulièrement entre 80 °C et 200 °C.

3. Composition selon l'une quelconque des revendications précédentes, **caractérisée en ce que** le fluide hydrocarboné présente une teneur en carbone d'origine biologique supérieure ou égale à 90 % en poids, par rapport au poids total du fluide hydrocarboné.

4. Composition selon l'une quelconque des revendications 1 à 3, **caractérisée en ce que** le fluide hydrocarboné est totalement saturé, de préférence **en ce que** les composants du fluide hydrocarboné sont choisis parmi les isoparaffines comprenant de 12 à 30 atomes de carbone, préférentiellement de 13 à 19 atomes de carbone, et plus préférentiellement de 14 à 18 atomes de carbone.

5. Composition selon l'une quelconque des revendications précédentes, **caractérisée en ce que** le fluide hydrocarboné comprend une teneur supérieure ou égale à 90 % en poids, en particulier supérieure ou égale à 95 % en poids, et encore plus avantageusement supérieure ou égale à 98 % en poids d'isoparaffines, par rapport au poids total en fluide hydrocarboné, en particulier le fluide hydrocarboné présente une teneur en poids d'isoparaffines allant de 98 % à 100 %, par rapport au poids total du fluide hydrocarboné, et une viscosité cinématique à 40 °C inférieure ou égale à 5 cSt, de préférence inférieure ou égale à 4 cSt, et préférentiellement inférieure ou égale à 3,5 cSt.

6. Composition selon l'une quelconque des revendications précédentes, **caractérisée en ce que** le fluide hydrocarboné est obtenu par un procédé d'hydrogénation catalytique à une température allant de 80 °C à 180 °C et à une pression allant de 50 bars à 160 bars d'une charge d'origine biologique désoxygénée et/ou isomérisée.

7. Composition selon l'une quelconque des revendications précédentes, **caractérisée en ce que** R_{F} est un groupe (C₁-C₁₆)alkyle perfluoré ou partiellement fluoré éventuellement interrompu par un ou deux hétéroatomes choisis parmi un atome d'azote et un atome d'oxygène et R_{H} est un groupe (Ci-Cis)alkyle, notamment (C₃-C₁₅)alkyle, ou (C₂-C₁₅)alkényle, ledit groupe étant éventuellement substitué par un cycle hydrocarboné tel que le groupe (C₃-C₆)cycloalkyle, phényle ou benzyle.

8. Composition selon l'une quelconque des revendications précédentes, **caractérisée en ce que** le linker L est choisi parmi les groupes divalents suivants : -CH₂-, - CH=CH-, -O-, -S- ou -PO₄-.

9. Composition selon l'une quelconque des revendications précédentes, **caractérisée en ce que** le retardateur de flammes de formule (I) est présent dans une teneur supérieure ou égale à 2 % en poids, encore plus particulièrement dans une teneur comprise entre 2 % et 20 % en poids, avantageusement entre 3 % et 10 % en poids, par rapport au poids total de la composition.

10. Composition selon l'une quelconque des revendications précédentes, **caractérisée en ce qu'**elle comprend au moins un fluide hydrocarboné comprenant une teneur supérieure ou égale à 90 % en poids, en particulier supérieure ou égale à 95 % en poids, et encore plus avantageusement supérieure ou égale à 98 % en poids d'isoparaffines, par rapport au poids total en fluide hydrocarboné, au moins un agent retardateur de flammes de formule (I) et optionnellement au moins un inhibiteur de radicaux phosphoré.

11. Composition selon l'une quelconque des revendications précédentes, **caractérisée en ce qu'**elle comprend au moins un fluide hydrocarboné présentant une teneur en poids d'isoparaffines allant de 98 % à 100 %, par rapport au poids total du fluide hydrocarboné, et une viscosité cinématique à 40 °C inférieure ou égale à 5 cSt, de préférence inférieure ou égale à 4 cSt, et préférentiellement inférieure ou égale à 3,5 cSt, au moins un agent retardateur de flammes de formule (I) et optionnellement au moins un inhibiteur de radicaux phosphoré.

12. Utilisation d'au moins un retardateur de flammes répondant à la formule (I) :
R_{F}-L-R_{H} (I)
dans laquelle
R_{F} est un groupe perfluoré ou partiellement fluoré, en particulier comportant de 1 à 22, de préférence de 1 à 20, encore plus préférentiellement de 1 à 16 atomes de carbone,
R_{H} est un groupe hydrocarboné comportant entre 3 et 22 atomes de carbone, plus préférentiellement entre 3 et 18, par exemple entre 5 et 15, voire entre 10 et 15 atomes de carbone, et
L est un linker,
dans une composition de refroidissement d'un système de propulsion d'un véhicule électrique ou hybride, et plus particulièrement de son électronique de puissance et de ses batteries, pour lui conférer des propriétés de résistance à l'inflammation, ladite composition de refroidissement comprenant au moins un fluide hydrocarboné ayant un point d'ébullition supérieur ou égal à 50 °C, le fluide hydrocarboné ayant un point d'ébullition supérieur ou égal à 50°C étant présent dans la composition en une teneur supérieure ou égale à 80 % en poids, de préférence allant de 80 % à 99,5 % en poids, par rapport au poids total de la composition.

13. Procédé de refroidissement et d'ignifugation d'au moins une batterie d'un système de propulsion d'un véhicule électrique ou hybride, comprenant au moins une étape de mise en contact d'au moins une batterie, en particulier une batterie Lithium-ion ou Nickel-Cadmium, avec une composition telle que définie selon l'une quelconque des revendications 1 à 11.

14. Procédé selon la revendication 13, **caractérisé en ce que** ladite au moins une batterie est en immersion ou semi-immersion, statique ou en circulation, dans ladite composition ou ladite composition est mise en contact direct avec les batteries par injection, jet, par sprayage ou encore par formation d'un brouillard à partir de ladite composition sous pression et par gravité sur la batterie.

## Patentansprüche

1. Zusammensetzung zum Kühlen eines Antriebssystems eines Elektro- oder Hybridfahrzeugs, und insbesondere seiner Leistungselektronik und seiner Batterien, umfassend:
(i) mindestens ein Kohlenwasserstofffluid mit einem Siedepunkt größer gleich 50°C; und
(ii) mindestens einen Flammhemmer, der der Formel (I)
R_{F}-L-R_{H} (I)
entspricht, in der
R_{F} eine perfluorierte oder teilweise fluorierte Gruppe ist, die insbesondere 1 bis 22, bevorzugt 1 bis 20, noch bevorzugter 1 bis 16 Kohlenstoffatome aufweist,
R_{H} eine Kohlenwasserstoffgruppe ist, die zwischen 3 und 22 Kohlenstoffatome, bevorzugter zwischen 3 und 18, beispielsweise zwischen 5 und 15 oder sogar zwischen 10 und 15 Kohlenstoffatome aufweist, und
L ein Linker ist,
wobei das Kohlenwasserstofffluid mit einem Siedepunkt größer gleich 50 °C in der Zusammensetzung mit einem Gehalt größer gleich 80 Gewichts-%, bevorzugt von 80 Gewichts-% bis 99,5 Gewichts-%, bezogen auf das Gesamtgewicht der Zusammensetzung, vorhanden ist,
wobei der Flammhemmer mit der Formel (I) mit einem Gehalt größer gleich 0,5 Gewichts-%
bezogen auf das Gesamtgewicht der Zusammensetzung vorhanden ist,
wobei die Zusammensetzung kein Wasser aufweist.

2. Zusammensetzung nach Anspruch 1, **dadurch gekennzeichnet, dass** das Kohlenwasserstofffluid einen Siedepunkt zwischen 50 °C und 350 °C, insbesondere zwischen 60 °C und 250 °C und ganz besonders zwischen 80 °C und 200 °C aufweist.

3. Zusammensetzung nach einem der vorhergehenden Ansprüche, **dadurch gekennzeichnet, dass** das Kohlenwasserstofffluid einen Gehalt an Kohlenstoff biologischen Ursprungs von größer gleich 90 Gewichts-% bezogen auf das Gesamtgewicht des Kohlenwasserstofffluids aufweist.

4. Zusammensetzung nach einem der Ansprüche 1 bis 3, **dadurch gekennzeichnet, dass** das Kohlenwasserstofffluid vollständig gesättigt ist, bevorzugt dadurch, dass die Bestandteile des Kohlenwasserstofffluids aus Isoparaffinen mit 12 bis 30 Kohlenstoffatomen, vorzugsweise 13 bis 19 Kohlenstoffatomen und bevorzugter 14 bis 18 Kohlenstoffatomen ausgewählt sind.

5. Zusammensetzung nach einem der vorhergehenden Ansprüche, **dadurch gekennzeichnet, dass** das Kohlenwasserstofffluid einen Gehalt von größer gleich 90 Gewichts-%, insbesondere größer gleich 95 Gewichts-% und noch vorteilhafter größer gleich 98 Gewichts-% Isoparaffinen bezogen auf das Gesamtgewicht des Kohlenwasserstofffluids umfasst, wobei das Kohlenwasserstofffluid insbesondere einen Isoparaffin-Gehalt von 98 Gewichts-% bis 100 Gewichts-%, bezogen auf das Gesamtgewicht des Kohlenwasserstofffluids, und eine kinematische Viskosität bei 40 °C von kleiner gleich 5 cSt, bevorzugt kleiner gleich 4 cSt und vorzugsweise kleiner gleich 3,5 cSt aufweist.

6. Zusammensetzung nach einem der vorhergehenden Ansprüche, **dadurch gekennzeichnet, dass** das Kohlenwasserstofffluid durch ein Verfahren zur katalytischen Hydrierung eines desoxidierten und/oder isomerisierten Einsatzmaterials biologischen Ursprungs bei einer Temperatur von 80 °C bis 180 °C und einem Druck von 50 bar bis 160 bar erhalten wird.

7. Zusammensetzung nach einem der vorhergehenden Ansprüche, **dadurch gekennzeichnet, dass** R_{F} eine perfluorierte oder teilweise fluorierte (C₁-C₁₆)-Alkylgruppe ist, die gegebenenfalls durch ein oder zwei Heteroatome unterbrochen ist, die aus einem Stickstoffatom und einem Sauerstoffatom ausgewählt sind, und R_{H} eine (C₁-C₁₅)-Alkyl-, insbesondere (C₃-C₁₅)-Alkyl- oder (C₂-C₁₅)-Alkenylgruppe ist, wobei die Gruppe gegebenenfalls mit einem Kohlenwasserstoffring wie der (C₃-C₆)-Cycloalkyl-, Phenyl- oder Benzylgruppe substituiert ist.

8. Zusammensetzung nach einem der vorhergehenden Ansprüche, **dadurch gekennzeichnet, dass** der Linker L aus den folgenden zweiwertigen Gruppen ausgewählt ist: -CH₂-, -CH=CH-, -O-, -S- oder -PO₄-.

9. Zusammensetzung nach einem der vorhergehenden Ansprüche, **dadurch gekennzeichnet, dass** der Flammhemmer mit der Formel (I) einen Gehalt von größer gleich 2 Gewichts-%, ganz besonders einen Gehalt zwischen 2 und 20 Gewichts-%, vorteilhafterweise zwischen 3 und 10 Gewichts-%, bezogen auf das Gesamtgewicht der Zusammensetzung, aufweist.

10. Zusammensetzung nach einem der vorhergehenden Ansprüche, **dadurch gekennzeichnet, dass** sie mindestens ein Kohlenwasserstofffluid mit einem Gehalt von größer gleich 90 Gewichts-%, insbesondere größer gleich 95 Gewichts-% und noch vorteilhafter von größer gleich 98 Gewichts-% Isoparaffinen, bezogen auf das Gesamtgewicht des Kohlenwasserstofffluids, mindestens einen Flammhemmer mit der Formel (I) und optional mindestens einen phosphorhaltigen Radikalinhibitor umfasst.

11. Zusammensetzung nach einem der vorhergehenden Ansprüche, **dadurch gekennzeichnet, dass** sie mindestens ein Kohlenwasserstofffluid mit einem Gehalt an Isoparaffinen von 98 % bis 100 %, bezogen auf das Gesamtgewicht des Kohlenwasserstofffluids, und einer kinematischen Viskosität bei 40 °C von kleiner gleich 5 cSt, bevorzugt kleiner gleich 4 cSt und vorzugsweise kleiner gleich 3,5 cSt, mindestens einen Flammhemmer mit der Formel (I) und optional mindestens einen phosphorhaltigen Radikalinhibitor umfasst.

12. Verwendung von mindestens einem Flammhemmer, der der Formel (I)
R_{F}-L-R_{H} (I)
entspricht, in der
R_{F} eine perfluorierte oder teilweise fluorierte Gruppe ist, die insbesondere 1 bis 22, bevorzugt 1 bis 20, noch bevorzugter 1 bis 16 Kohlenstoffatome aufweist,
R_{H} eine Kohlenwasserstoffgruppe ist, die zwischen 3 und 22 Kohlenstoffatome, bevorzugter zwischen 3 und 18, beispielsweise zwischen 5 und 15 oder sogar zwischen 10 und 15 Kohlenstoffatome aufweist, und
L ein Linker ist,
in einer Zusammensetzung zum Kühlen eines Antriebssystems eines Elektro- oder Hybridfahrzeugs, und insbesondere seiner Leistungselektronik und seiner Batterien, um ihr flammhemmende Eigenschaften zu verleihen, wobei die Zusammensetzung zum Kühlen mindestens ein Kohlenwasserstofffluid mit einem Siedepunkt größer gleich 50°C umfasst, wobei das Kohlenwasserstofffluid mit einem Siedepunkt größer gleich 50°C in der Zusammensetzung mit einem Gehalt von größer gleich 80 Gewichts-%, bevorzugt von 80 Gewichts-% bis 99,5 Gewichts-%, bezogen auf das Gesamtgewicht der Zusammensetzung, vorhanden ist.

13. Verfahren zum Kühlen und flammhemmenden Ausrüsten mindestens einer Batterie eines Antriebssystems eines Elektro- oder Hybridfahrzeugs, umfassend mindestens einen Schritt des Inkontaktbringens mindestens einer Batterie, insbesondere einer Lithiumionenbatterie oder Nickel-Cadmium-Batterie, mit einer Zusammensetzung gemäß einem der Ansprüche 1 bis 11.

14. Verfahren nach Anspruch 13, **dadurch gekennzeichnet, dass** die mindestens eine Batterie statisch oder mit Umlauf in die Zusammensetzung eingetaucht oder teilweise eingetaucht ist, oder die Zusammensetzung durch Injektion, Strahl, durch Sprühen oder auch durch Bildung eines Nebels aus der Zusammensetzung unter Druck und durch Schwerkraft auf die Batterie mit den Batterien in direkten Kontakt gebracht wird.

## Claims

1. Composition for cooling a propulsion system of an electric or hybrid vehicle, and more particularly its power electronics and its batteries, comprising
(i) at least one hydrocarbon-based fluid with a boiling point of greater than or equal to 50°C, and
(ii) at least one fire retardant corresponding to formula (I)
R_{F}-L-R_{H} (I)
in which
R_{F} is a perfluorinated or partially fluorinated group, in particular including from 1 to 22, preferably from 1 to 20 and even more preferentially from 1 to 16 carbon atoms, R_{H} is a hydrocarbon-based group including between 3 and 22 carbon atoms, more preferentially between 3 and 18, for example between 5 and 15, or even between 10 and 15 carbon atoms, and
L is a linker,
the hydrocarbon-based fluid with a boiling point of greater than or equal to 50°C being present in the composition in a content of greater than or equal to 80% by weight, preferably ranging from 80% to 99.5% by weight, relative to the total weight of the composition; said fire retardant of formula (I) being present in a content of greater than or equal to 0.5% by weight, relative to the total weight of the composition;
said composition being free from water.

2. Composition according to Claim 1, **characterized in that** the hydrocarbon-based fluid has a boiling point of between 50°C and 350°C, in particular between 60°C and 250°C and even more particularly between 80°C and 200°C.

3. Composition according to any one of the preceding claims, **characterized in that** the hydrocarbon-based fluid has a content of carbon of biological origin of greater than or equal to 90% by weight, relative to the total weight of the hydrocarbon-based fluid.

4. Composition according to any one of Claims 1 to 3, **characterized in that** the hydrocarbon-based fluid is totally saturated, preferably **in that** the components of the hydrocarbon-based fluid are chosen from isoparaffins comprising from 12 to 30 carbon atoms, preferentially from 13 to 19 carbon atoms and more preferentially from 14 to 18 carbon atoms.

5. Composition according to any one of the preceding claims, **characterized in that** the hydrocarbon-based fluid comprises a content of greater than or equal to 90% by weight, in particular greater than or equal to 95% by weight, and even more advantageously greater than or equal to 98% by weight of isoparaffins, relative to the total weight of hydrocarbon-based fluid; in particular, the hydrocarbon-based fluid has a weight content of isoparaffins ranging from 98% to 100%, relative to the total weight of the hydrocarbon-based fluid, and a kinematic viscosity at 40°C of less than or equal to 5 cSt, preferably less than or equal to 4 cSt, and preferentially less than or equal to 3.5 cSt.

6. Composition according to any one of the preceding claims, **characterized in that** the hydrocarbon-based fluid is obtained via a process of catalytic hydrogenation at a temperature ranging from 80°C to 180°C and at a pressure ranging from 50 bar to 160 bar of a deoxygenated and/or isomerized feedstock of biological origin.

7. Composition according to any one of the preceding claims, **characterized in that** R_{F} is a perfluorinated or partially fluorinated (C₁-C₁₆) alkyl group, optionally interrupted with one or two heteroatoms chosen from a nitrogen atom and an oxygen atom, and R_{H} is a (C₁-C₁₅) alkyl, notably (C₃-C₁₅) alkyl or (C₂-C₁₅) alkenyl group, said group being optionally substituted with a hydrocarbon-based ring such as the (C₃-C₆)cycloalkyl, phenyl or benzyl group.

8. Composition according to any one of the preceding claims, **characterized in that** the linker L is chosen from the following divalent groups: -CH₂-, -CH=CH-, -O-, -S- or -PO₄-.

9. Composition according to any one of the preceding claims, **characterized in that** the fire retardant of formula (I) is present in a content of greater than or equal to 2% by weight, even more particularly in a content of between 2% and 20% by weight, advantageously between 3% and 10% by weight, relative to the total weight of the composition.

10. Composition according to any one of the preceding claims, **characterized in that** it comprises at least one hydrocarbon-based fluid comprising a content of greater than or equal to 90% by weight, in particular greater than or equal to 95% by weight, and even more advantageously greater than or equal to 98% by weight of isoparaffins, relative to the total weight of hydrocarbon-based fluid, at least one fire retardant agent of formula (I) and optionally at least one phosphorus-based free-radical inhibitor.

11. Composition according to any one of the preceding claims, **characterized in that** it comprises at least one hydrocarbon-based fluid with a weight content of isoparaffins ranging from 98% to 100%, relative to the total weight of the hydrocarbon-based fluid, and a kinematic viscosity at 40°C of less than or equal to 5 cSt, preferably less than or equal to 4 cSt, and preferentially less than or equal to 3.5 cSt, at least one fire retardant agent of formula (I) and optionally at least one phosphorus-based free-radical inhibitor.

12. Use of at least one fire retardant corresponding to formula (I):
R_{F}-L-R_{H} (I)
in which
R_{F} is a perfluorinated or partially fluorinated group, in particular including from 1 to 22, preferably from 1 to 20 and even more preferentially from 1 to 16 carbon atoms, R_{H} is a hydrocarbon-based group including between 3 and 22 carbon atoms, more preferentially between 3 and 18, for example between 5 and 15, or even between 10 and 15 carbon atoms, and
L is a linker,
in a composition for cooling a propulsion system of an electric or hybrid vehicle, and more particularly its power electronics and its batteries, to give it ignition-resistance properties, said cooling composition comprising at least one hydrocarbon-based fluid with a boiling point of greater than or equal to 50°C, the hydrocarbon-based fluid with a boiling point of greater than or equal to 50°C being present in the composition in a content of greater than or equal to 80% by weight, preferably ranging from 80% to 99.5% by weight, relative to the total weight of the composition.

13. Process for cooling and fire-protecting at least one battery of a propulsion system of an electric or hybrid vehicle, comprising at least one step of placing at least one battery, in particular a lithium-ion or nickel-cadmium battery, in contact with a composition as defined in any one of Claims 1 to 11.

14. Process according to Claim 13, **characterized in that** said at least one battery is in immersion or semi-immersion, static or in circulation, in said composition or said composition is placed in direct contact with the batteries by injection, by jet, by spraying or else by formation of a mist using said composition under pressure and by gravity on the battery.
